# EUROPEAN PATENT APPLICATION

(11) **EP 1 069 005 A2**
(43) Date of publication of application: **17.01.2001**
(21) Application number: 00115427.7
(22) Date of filing: 17.07.2000
(51) Int. Cl.: B60R 21/20

(54) **Assembly with trim cover for housing an inflatable airbag**

(30) Priority: 16.07.1999 US 356780
(71) Applicant: Johnson Controls Technology Company, Plymouth, Michigan 48170 (US)
(72) Inventor: Smith, Sandra L., Waterford, Michigan 48328 (US); Moilanen, Gerald M., Commerce Twp., Michigan 48382 (US)
(74) Representative: Solf, Alexander, Dr.

(57) **Abstract**

An assembly for housing an inflatable airbag, including a trim cover for covering a component of a vehicle, a first liner section, and a second liner section. The trim cover includes a first trim section and a second trim section, secured together at a first seam. The first liner section, which is secured to the first trim section, includes a first aperture for receiving a fastener to mount the inflatable airbag to a structural member. The second liner section, which is secured to the second trim section, defines a second aperture for receiving the fastener to mount the inflatable airbag to the structural member. When the fastener is received by both the apertures, the force of the inflatable airbag is distributed over the areas surrounding the apertures, the cavity liner exhibits improved strength characteristics, and the assembly produces consistent inflations.

## Description

### FIELD OF THE INVENTION

The invention relates generally to an assembly for housing an inflatable airbag. More particularly, the invention relates to an assembly that includes a cavity liner for directing the force of an inflatable airbag in a direction towards a particular seam in the trim cover, thereby directing deployment of the inflatable airbag through the particular seam.

### BACKGROUND FOR THE INVENTION

In recent years, automobile manufacturers have directed an increasing amount of attention towards providing improved side impact protection for vehicle passengers. One of the viable methods includes providing an inflatable airbag mounted to the seat back frame of a passenger seat. Seat mounted side impact inflatable airbags (SIAB) fall into two general categories. The first type of seat mounted SIABs deploys from a visible, discrete door on the outboard side of the seat back or seat cushion bolster. The other type of seat mounted SIABs is stowed beneath the seat trim and is designed to deploy through the trim cover.

In some respects, the first type has an advantage in that the technology for the deployment of an airbag through a discrete door has been already developed for frontal airbags in steering wheels and instrument panels. The first type has the disadvantage, however, in that the location of the SIAB is generally limited to the side of the seat so that the visible door is not a part of the seating surface engaged by a seat occupant. If it is desired for the airbag to deploy through the front corner of the seat back, such as the location of a bolster seam, the first type of seat mounted SIABs cannot be used. Rather, the second type of seat mounted SIABs must be used, typically under the trim cover and the foamed padding such that the airbag does not adversely affect the seat comfort.

One of the recent developments for the second type of seat mounted side impact airbags includes the use of a cavity liner for directing the force of the airbag in a direction towards a particular seam. One of the disadvantages of a cavity liner is that the cavity liner is typically formed as two distinct pieces, and these two pieces are stitched together. The stitching, unfortunately, introduces a variable in the inflation process, as the stitch may stretch. Thus, there is a need to provide a seat mounted side impact airbag that further facilitates consistent inflations.

### BRIEF SUMMARY OF THE INVENTION

Accordingly, the invention provides an assembly for housing an inflatable airbag module that overcomes the problems and disadvantages of the conventional techniques in the art. The present invention also provides for an assembly that further facilitates consistent inflations.

Briefly, the invention includes an assembly for housing an inflatable airbag, including a trim cover for covering a component of a vehicle, a first liner section, and a second liner section. The trim cover includes a first trim section and a second trim section, secured together at a first seam. The first liner section, which is secured to the first trim section, includes a first aperture for receiving a fastener to mount the inflatable airbag to a structural member, The second liner section, which is secured to the second trim section, defines a second aperture for receiving the fastener to mount the inflatable airbag to the structural member. When the fastener is received by both the apertures, the force of the inflatable airbag is distributed over the areas surrounding the apertures, the cavity liner exhibits improved strength characteristics, and the assembly produces consistent inflations.

### BRIEF DESCRIPTION OF THE DRAWINGS

Further features and advantages of the invention will become apparent from the following discussion and accompanying drawings, in which:
FIG. 1 is a perspective view of a passenger seat with an assembly according to a preferred embodiment of the invention;
FIG. 2 is a cross-sectional view of the assembly according to the preferred embodiment of the invention, taken along the line 2-2 in FIG. 1;
FIG. 3 is a partial perspective view of a cavity liner according to the preferred embodiment of the invention;
FIG. 4 is a cross-sectional view of the cavity liner according to the preferred embodiment of the invention, taken along the line 4-4 in FIG. 3; and
FIGS. 5-9 are side views of the steps for producing the assembly according to the preferred method of the invention.

### DETAILED DESCRIPTION OF THE PREFERRED EMBODIMENT

The following description of the preferred embodiment and method is merely exemplary in nature, and is in no way intended to limit the invention, or its applications, or uses.

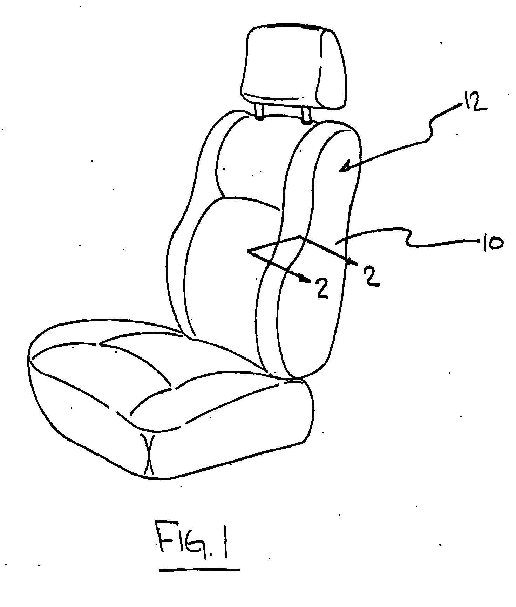

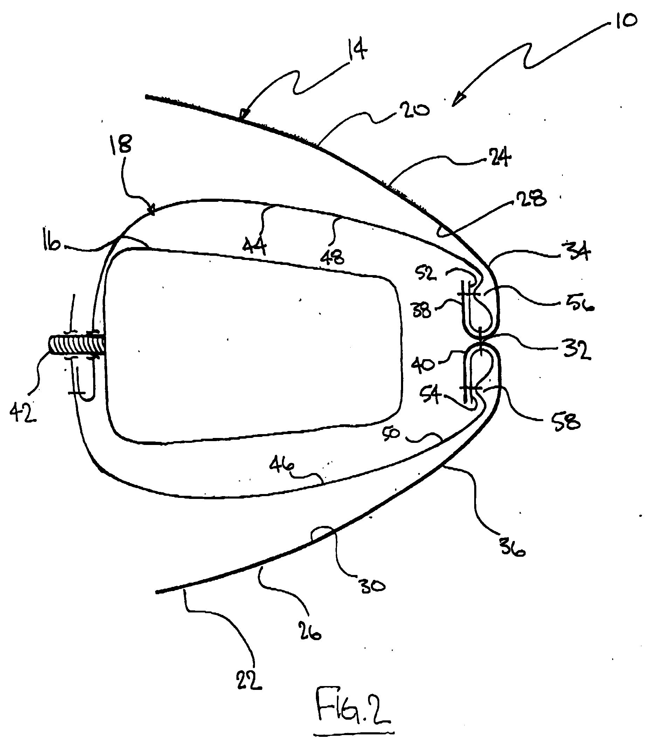

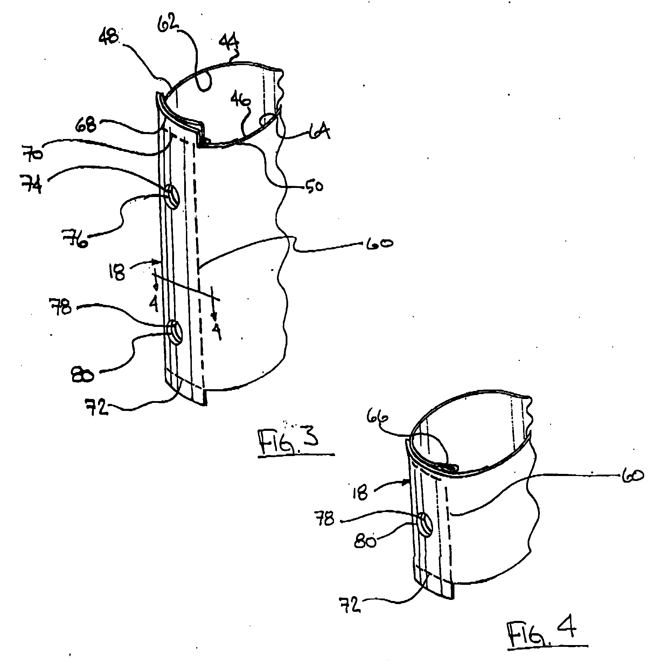

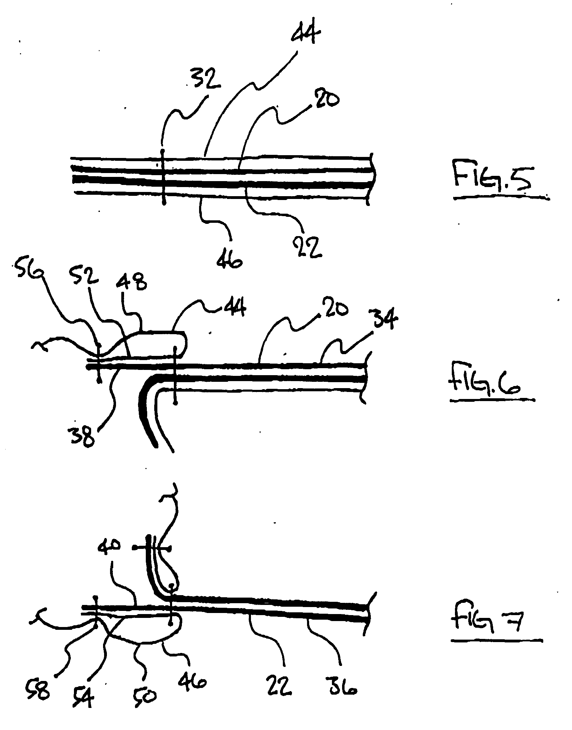

As shown in FIG. 1, the assembly 10 functions to cover an internal seat back frame of the passenger seat 12 and to house an inflatable airbag module hidden in the passenger seat 12 and attached to the seat back frame. The assembly 10, however, may be used to cover other components of a vehicle, for example, the dashboard, the headliner, the roof pillar, the console, or any other appropriate component.

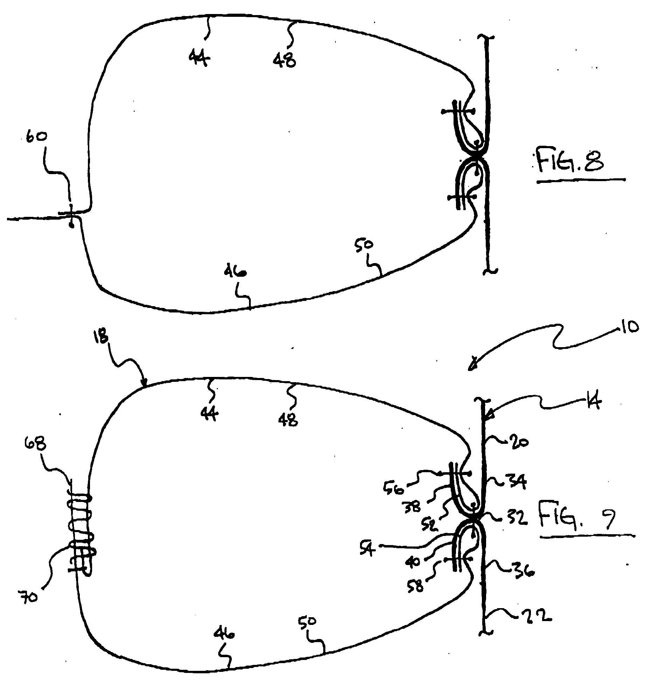

As shown in FIG. 2, the assembly 10 of the preferred embodiment of the invention includes a trim cover 14, an inflatable airbag module 16, and a cavity liner 18. The trim cover 14 includes a first trim section 20 and a second trim section 22. Both trim sections 20 and 22 have outer surfaces 24 and 26 that are made from a durable material such as leather, cloth, and vinyl, and inner surfaces 28 and 30 that are made from a softer material such as foamed padding. The first trim section 20 is secured to the second trim section 22 by a first seam 32. In this regard, the trim sections 20 and 22 are folded inward and the outer surface 24 of the first trim section 20 contacts the outer surface 26 of the second trim section 22. The first seam 32 divides the trim sections 20 and 22 into body portions 34 and 36 and margin portions 38 and 40. The first seam 32 is a conventional stitch or, alternatively, may be another fastener, such as adhesive, snaps, staples, VELCRO®, and DUAL-LOCK®. While the outer surfaces 24 and 26 of the body portions 34 and 36 are visible to the passengers of the vehicle, the inner surfaces 28 and 30 of the body portions 34 and 36 and the entirety of the margin portions 38 and 40 are hidden.

The inflatable airbag module 16 functions to reduce the severity of a vehicular impact by quickly inflating an airbag (not shown) between a passenger of the vehicle and the surfaces of the vehicle. The inflatable airbag module 16 is a conventional side impact airbag module. The inflatable airbag module 16 connects to the seat back frame (not shown) by a fastener 42. Preferably, the fastener 42 includes a stud and a bolt, but as a person of ordinary skill in the art would appreciate, other suitable fasteners can be used. In other applications, the inflatable airbag module 16 may be secured to a dashboard structural member, a roof portion, a roof pillar, or any other suitable structural element of the vehicle. Inflatable airbag modules are known and used in the art of inflatable airbag systems, and the implementation of the inflatable airbag module 16 into the assembly 10 would be readily understood by a person of ordinary skill in the art.

As the airbag inflates, it rapidly increases in volume and pushes on the trim cover 14. To direct deployment of the airbag through the trim cover 14, the cavity liner 18 of the invention directs the force of the airbag in a direction toward the first seam 32. The cavity liner 18 includes a first liner section 44 and a second liner section 46. The first liner section 44 is secured to the first trim section 20 at the first seam 32, and the second liner section 46 is secured to the second trim section 22 at the first seam 32. Accordingly, the first seam 32 further divides the liner sections 44 and 46 into body portions 48 and 50 and margin portions 52 and 54. To direct the force of the inflatable airbag towards the first seam 32, the margin portions 38, 40, 52, and 54 are secured to the body portions 48 and 50 of the cavity liner 18. In this regard, the margin portion 52 of the first liner section 44 and the margin portion 38 of the first trim section 20 are secured to the body portion 48 of the first liner section 44 by a first margin seam 56. Likewise, the margin portion 54 of the second liner section 46 and the margin portion 40 of the second trim section 22 are secured to the body portion 50 of the second liner section 46 by a second margin seam 58. The margin seams 56 and 58, like the first seam 32, are conventional stitches or, alternatively, may be other fasteners, such as adhesive, snaps, staples, VELCRO®, and DUAL-LOCK®. Both margin seams 56 and 58, however, do not penetrate through the outer surfaces 24 and 26 of the trim cover 14. In other words, the margin seams 56 and 58 are substantially hidden from a vantage facing the outer surfaces 24 and 26 of the trim cover 14.

As shown in FIGS. 3 and 4, the first liner section 44 is secured to the second liner section 46 by a second seam 60. When using the second seam 60, the liner sections 44 and 46 are folded outward and an inner surface 62 of the first liner section 44 contacts an inner surface 64 of the second liner section 46. The second seam 60 further divides the liner sections 44 and 46 into body portions 48 and 50 and distal portions 66 and 68. The distal portion 68 of the second liner section 46 is folded over and secured to the body portion 48 of the first liner section 44 by a third seam 70 and a fourth seam 72. The seams 60, 70, and 72 are conventional stitches or, alternatively, may be other fasteners, such as adhesives, snaps, staples, VELCRO®, and DUAL-LOCK®.

The body portion 48 of the first liner section 44 defines a first aperture 74 for receiving the fastener 42 (shown in FIG. 2). Similarly, the distal portion 68 of the second liner section 46 defines a second aperture 76 for receiving the fastener 42 (shown in FIG. 2). When the fastener 42 (shown in FIG. 2) is received by both the first aperture 74 and the second aperture 76, the first liner section 44 and the second liner section 46 cooperate to form the cavity liner 18 for directing the force of the inflatable airbag in a direction towards the first seam 32. The body portion 48 of the first liner section 44 also defines a third aperture 78 for receiving a second fastener (not shown). Similarly, the distal portion 68 of the second liner section 46 defines a fourth aperture 80 for receiving the second fastener (not shown). The cavity liner 18 is further reinforced when the second fastener (not shown) is received by both the third aperture 78 and the fourth aperture 80. Because the force of the inflatable airbag is distributed over the areas surrounding the apertures 74, 76, 78, and 80, the cavity liner 18 of the preferred embodiment of the invention exhibits improved strength characteristics. The first liner section 44 and the second liner section 46 are made front a substantially non-elastic material such as 420, 630, or 840 denier nylon or polyester airbag fabric, or from other suitable materials.

The assembly 10 of the preferred embodiment of the invention may be produced by the following six general steps: (1) providing a first trim section 20 and a second trim section 22, and providing a first liner section 44 defining a first aperture 74 and a second liner section 46 defining a second aperture 76; (2) stitching a first seam 32 through the first liner section 44, the first trim section 20, the second trim section 22, and the second liner section 46, as shown in FIG. 5; (3) folding the body portion 48 of the first liner section 44 over the margin portion 52 of the first liner section 44, and stitching a first margin seam 56 through the body portion 48 of the first liner section 44 and the margin portion 38 of the first trim section 20, without substantial penetration through the body portion 34 of the first trim section 20 by the stitching, as shown in FIG. 6; (4) folding the body portion 50 of the second liner section 46 over the margin portion 54 of the second liner section 46, and stitching a second margin seam 58 through the body portion 50 of the second liner section 46 and the margin portion 40 of the second trim section 22, without substantial penetration through the body portion 36 of the second trim section 22 by the stitching as shown in FIG. 7; (5) stitching a second seam 60 through the body portion 48 of the first liner section 44 and the body portion 50 of the second liner section 46, as shown in FIG. 8; and (6) folding the distal portion 68 of the second liner section 46 over the body portion 48 of the first liner section 44, aligning the first aperture 74 (shown in FIG. 4) and the second aperture 76 (shown in FIGS. 3 and 4), and stitching a third seam 70 through the distal portion 68 of the second liner section 46 and the body portion 48 of the first liner section 44. In its final form, as shown in FIG. 9, the assembly 10 may now house an inflatable airbag (not shown).

In the first preferred method of the invention, steps 1 through 6 are followed in numerical order. In alternate methods, steps 1 through 6 may be followed in a different order.

The second preferred method of the invention includes an additional step that occurs between step 1 and step 2 discussed above with respect to the first preferred method of the invention. The additional step includes stitching a first minor tack (not shown) through the margin portion 52 of the first liner section 44 and the margin portion 38 of the first trim section 20. The additional step further includes stitching a second minor tack (also not shown) through the margin portion 54 of the second liner section 46 and the margin portion 40 of the second trim section 22. The additional step functions to align the margin portions 52 and 54 with the margin portions 38 and 40.

The foregoing discussion discloses and describes preferred embodiments and methods of the invention. One skilled in the art will readily recognize from such discussion, and from the accompanying drawings and claims, that changes and modifications can be made to the invention without departing from the true spirit and fair scope of the invention as defined in the following claims.

## Claims

1. An assembly for housing an inflatable airbag, comprising:
a trim cover for covering a component of a vehicle, said trim cover having a first trim section and a second trim section, and said first trim section being secured to said second trim section at a first seam;
an inflatable airbag; and
a cavity liner for directing the force of the inflatable airbag in a direction towards said first seam, said cavity liner having a first liner section and a second liner section, said first liner section being secured to said first trim section and defining a first aperture for receiving a fastener to mount said inflatable airbag to a structural member, and said second liner section being secured to said second trim section and defining a second aperture for receiving the fastener to mount said inflatable airbag to the structural member;
wherein said first liner section has an outer surface and an inner surface, said second liner section has an outer surface and an inner surface, said inner surface of said first liner section is secured to said inner surface of said second liner section at said second seam, said second seam defines body portions and distal portions of said first liner section and said second liner section, and said distal portion of one of said first liner section and said second liner section is secured to said body portion of the other of said first liner section and said second liner section.

2. An assembly for housing an inflatable airbag, comprising:
a trim cover for covering a component of a vehicle, said trim cover having a first trim section and a second trim section, said first trim section being secured to said second trim section at a first seam;
a first liner section being secured to said first trim section and defining a first aperture for receiving a fastener to mount the inflatable airbag to a structural member; and
a second liner section being secured to said second trim section and defining a second aperture for receiving the fastener to mount the inflatable airbag to the structural member.

3. The assembly of Claim 2, wherein said first aperture is located at a first position on said first liner section and said second aperture is located at a second position on said second liner section such that when the fastener is received by both said first aperture and said second aperture, said first liner section and said second liner section cooperate to form a cavity liner for directing the force of the inflatable airbag in a direction towards said first seam.

4. The assembly of Claim 2, wherein said first liner section is secured to said second liner section at a second seam.

5. The assembly of Claim 4, wherein said first liner section has an outer surface and an inner surface, said second liner section has an outer surface and an inner surface, and said inner surface of said first liner section being secured to said inner surface of said second liner section at said second seam.

6. The assembly of Claim 5, wherein said second seam defines body portions and distal portions of said first liner section and said second liner section, and said distal portion of one of said first liner section and said second liner section is secured to said body portion of the other of said first liner section and said second liner section.

7. The assembly of Claim 2, wherein said first trim section has an outer surface and an inner surface, said second trim section has an outer surface and an inner surface, and said outer surface of said first trim section is secured to said outer surface of said second trim section at said first seam.

8. The assembly of Claim 7, wherein said first seam defines a body portion and a margin portion of said first trim section, said margin portion of said first trim section is secured to said first liner section without substantial penetration through said outer surface of said body portion of said first trim section, said first seam further defines a body portion and a margin portion of said second trim section, and said margin portion of said second trim section is secured to said second liner section without substantial penetration through said outer surface of said body portion of said second trim section.

9. A method for producing an assembly for housing an inflatable airbag, comprising the steps of:
(a) providing a trim cover having a first trim section and a second trim section, and providing a cavity liner having a first liner section defining a first aperture, and a second liner section defining a second aperture;
(b) stitching a first seam through the first trim section and the second trim section, securing the first liner section to the first trim section, and securing the second liner section to the second trim section; and
(c) inserting a fastener for mounting the inflatable airbag to a structural member through the first aperture and the second aperture.

10. The method of Claim 9, further comprising the step of (d) stitching a second seam through the first liner section and the second liner section, folding a distal portion of the second liner section over a body portion of the first liner section, and aligning the first aperture and the second aperture.

11. The method of Claim 10, wherein step (d) occurs before step (c).

12. The method of Claim 10, wherein step (d) includes stitching a third seam through the distal portion of the second liner section and the body portion of the first liner section.

13. The method of Claim 12, wherein step (d) occurs before step (c).

14. The method of Claim 9, wherein step (b) includes stitching the first seam through the first liner section, the first trim section, the second trim section, and the second liner section.

15. The method of Claim 9, wherein step (b) includes stitching a first margin seam through the first trim section and the first liner section thereby securing the first liner section to the first trim section, and stitching a second margin seam through the second trim section and the second liner section thereby securing the second liner section to the second trim section.
